# EUROPÄISCHE PATENTANMELDUNG

(11) **EP 0 989 750 A2**
(43) Veröffentlichungstag der Anmeldung: **29.03.2000**
(21) Anmeldenummer: 99117255.2
(22) Anmeldetag: 02.09.1999
(51) Int. Cl.: H04N 7/14

(54) **Videoanrufbeantworter und Betriebsverfahren für einen Videoanrufbeantworter**

(30) Priorität: 24.09.1998 DE 19843914
(71) Anmelder: SIEMENS AKTIENGESELLSCHAFT, 80333 München (DE)
(72) Erfinder: Lippe, Maik, 44145 Dortmund (DE)

(57) **Zusammenfassung**

Es wird ein Videoanrufbeantworter beschrieben, der sowohl auf einem PC, als auch auf einem Bildtelefon realisiert sein kann. Dieser Anrufbeantworter kann im PC kostengünstig mit der bereits vorhanden Siemens IVIEW-PC-Karte realisiert werden.

## Beschreibung

Die Erfindung bezieht sich auf eine Einrichtung und ein Verfahren zum Speichern und zur Wiedergabe von Bild- und Toninformation.

Anrufbeantworter zur Wiedergabe von Nachrichten in Form von akustischen Mitteilungen sind aus dem Stand der Technik bekannt. Von solchen Geräten werden für den Fall, daß der Teilnehmer augenblicklich nicht erreichbar ist, einem Anrufenden vorgefertigte Nachrichten wiedergegeben, woraufhin dieser eine Mitteilung zur Speicherung auf dem Gerät hinterlassen kann. Weiterhin ist es bekannt, derartige Geräte unter Zuhilfenahme einer Einschubkarte für einen Personalcomputer in Verbindung mit einem ISDN-Anschluß zu realisieren. Ein Beispiel für ein solches Produkt stellt die PC-Einschubkarte IVIEW der Firma Siemens AG dar. Die Funktionen der Karte sind auf den Internetseiten mit den Adressen http://w3.siemens.de/pn/ke/isdn/ip0300.htm, .../ip0302.htm, .../ip0304.htm dargestellt. Dort wird beschrieben, daß mit dieser Karte ein Komforttelefon auf dem PC realisiert werden kann und damit gespeicherte Tonnachrichten abrufbar sind.

Ein weiterer Stand der Technik ist nicht bekannt.

Die der Erfindung zugrundeliegende Aufgabe besteht darin, eine Einrichtung und ein Verfahren anzugeben, womit einem Anrufenden sowohl Töne, als auch Bilder zugespielt werden können.

Diese Aufgabe wird für die Einrichtung gemäß den Merkmalen des Patentanspruchs 1 und für das Verfahren gemäß den Merkmalen des Patentanspruches 9 gelöst. Weiterbildungen der Erfindung ergeben sich aus den abhängigen Ansprüchen.

Vorteilhaft wird durch den Einsatz der beschriebenen Einrichtung die Kommunikation mit Anrufern verbessert, weil diesen zusätzlich Bildinformation präsentiert werden kann, bzw. weil das Gerät Bildinformation von Anrufenden aufzeichnen kann.

In einer vorteilhaften Ausgestaltung weist das Gerät selbst Mittel zur Wiedergabe von Ton- und Bildinformationen auf, da dann keine Zusatzgeräte für diese Funktionen benötigt werden und redundante Funktionselemente entfallen können, die bei mehreren Geräten erforderlich wären.

In einer vorteilhaften Ausgestaltung der beschriebenen Einrichtung werden einem Anrufenden Bild- und/oder Tonsignale vorgespielt, die zuvor aus einem Datennetz entnommen wurden. Auf diese Weise entsteht ein Zusatznutzen durch die Wiedergabe von Bild- und Toninformationen, der keine zusätzlichen Eingabemittel, wie Kameras und Mikrofone am Videoanrufbeantworter erforderlich macht.

Vorteilhaft sind bei einer Weiterbildung des Videoanrufbeantworters als Ein- und Ausgabemittel aus dem Stand der Technik bekannte Einrichtungen wie Mikrofone, Lautsprecher, Bildschirme, LCD-Displays und Kameras vorhanden, da auf diese Weise ein kostengünstig herstellbares und technisch wenig aufwendiges Konsumentenprodukt zur Verfügung gestellt wird.

Vorteilhaft sind bei einer Ausgestaltung des Videoanrufbeantworters externe Aufzeichnungsgeräte anschließbar, weil so beispielsweise Geräte, die bei Kunden schon vorhanden sind, wie Videorecorder oder Tonbandgeräte genutzt werden können und sich ein technisch sehr einfach ausgestalteter Videoanrufbeantworter realisieren läßt.

Besonders vorteilhaft ist eine Ausgestaltung des Videoanrufbeantworters bei der Funktionen in einem Personalcomputer integriert sind, da Personalcomputer weit verbreitet sind und die Möglichkeiten der Videokommunikation derzeit bereits implementiert werden. In Verbindung mit dem Zugriff auf das Internet und anderer Datennetze, sowie der Zugriff auf das Telefonnetz steht so ein höchst flexibles und vielseitig einsetzbares Gerät zur Verfügung. Außerdem erhält der Personalcomputer so einen Zusatznutzen.

Vorteilhaft sind bei einer Ausgestaltung des Videoanrufbeantworters verschiedene Funktionen in einem Bildtelefon integriert, weil sich diese Geräte bereits am Markt etabliert haben, platzsparend aufstellen lassen und wenig Zusatzelemente für die benötigten Funktionen erfordern.

Vorteilhaft wird bei einem beschriebenen Verfahren zum Betrieb eines Videoanrufbeantworters einem Kommunikationsteilnehmer vom Videoanrufbeantworter eine Bild- und eine Tonsequenz vorgespielt, die zuvor aufgezeichnet wurde. Auf diese Weise wird dem Anrufenden eine größere Informationsmenge in kürzerer Zeit vermittelbar.

Vorteilhaft wird bei einer Ausgestaltung des beschriebenen Verfahrens eine von einem Anrufenden wiedergegebene Ton- und Bildnachricht von dem Videoanrufbeantworter aufgezeichnet, da so die Kommunikation zwischen den beiden Kommunikationsteilnehmern zeitlich entzerrt wird und pro Zeiteinheit eine größere Informationsmenge zwischen den beiden Kommunikationspartnern übertragbar ist.

Vorteilhaft sieht es eine weitere Ausgestaltung des beschriebenen Verfahrens vor, daß die vom Videoanrufbeantworter aufgezeichneten Videonachrichten in einer Übersicht dargestellt werden, wobei vorteilhaft je Nachricht auch dargestellt werden kann, ob sie lediglich aus Ton oder aus Ton- und Bildinformation, oder aus Bildinformation besteht. Auf diese Weise kann der Angerufene die für Ihn wichtigste Nachricht als erste auswählen und wiedergeben lassen.

Im folgenden wird die Erfindung anhand von Figuren und Ausführungsbeispielen weiter erläutert.
- Figur 1: zeigt ein Beispiel eines Kommunikationssystems aus zwei Videoanrufbeantwortern,
- Figur 2: zeigt eine Anzeigevorrichtung zur Anzeige von aufgezeichneten Nachrichten.

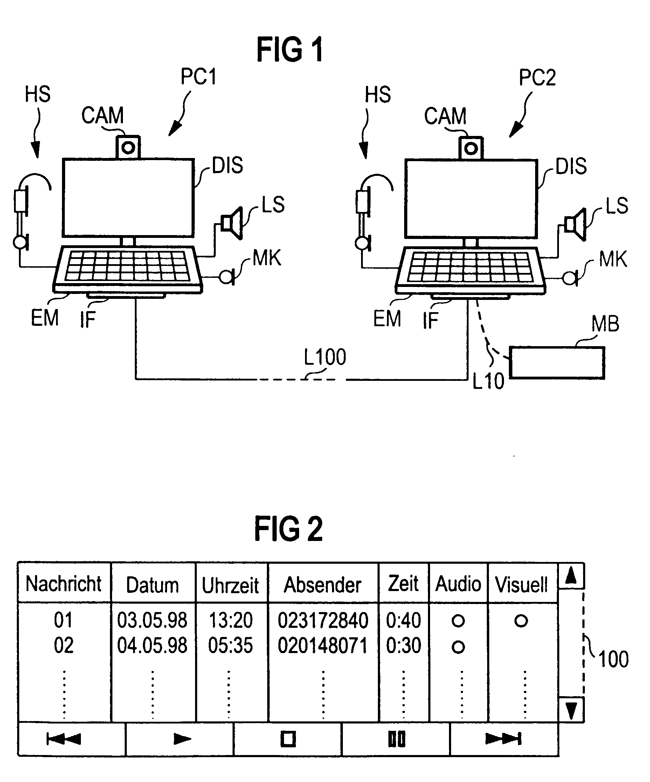

In Figur 1 sind zwei Videoanrufbeantworter PC1 und PC2 dargestellt, die in Form eines Personalcomputers realisiert sind. Sie bestehen aus Aufnahmemitteln für Bildinformationen oder Sequenzen CAM, Wiedergabemitteln für Bildersequenzen oder Standbilder DIS, Aufnahme- und Wiedergabemitteln für Toninformation MK und LS, sowie HS und Eingabemitteln für den Personalcomputer EM. Die beiden Videoanrufbeantworter, die auch für reguläre Videokommunikation benutzt werden können, sind durch eine Leitung L100 miteinander verbunden, die über je ein Interface IF an den PC angeschlossen ist. Mit dem Gerät PC2 ist beispielsweise über eine Leitung L10 ein Magnetbandgerät MB verbunden, bei dem es sich um einen Videorecorder bzw. um ein normales Tonaufzeichnungsgerät handeln kann.

Der Vorteil dieser Anordnung besteht darin, daß sich das jeweilige Gerät sowohl für die Aufzeichnung vom Bild als auch von Toninformation, als auch für die Kombination von Beidem eignet. Durch Einsatz dieser Anordnung wird es möglich, dem Empfänger eine Videodatei zu übertragen und diese mit einer Toninformation zu kombinieren. Als Verbindungsstrecke L100 kann beispielsweise eine ISDN-Leitung vorgesehen sein, eine ADSL-Leitung (asynchrones digital subscriber line), eine HDSL-Leitung (highbitrate digital subscriber line), oder ein anderes Kommunikationsmedium.

Beispielsweise soll vom PC1 aus der Teilnehmer von PC2 angerufen werden. Dort ist eine Anrufbeantworterfunktion realisiert. Beispielsweise möchte eine Firma ihren Mitarbeiter per Bildtelefon erreichen, wobei dieser Mitarbeiter einen Auftrag erhalten soll, der darin besteht an einer bestimmten Maschine an einer definierten Stelle ein Problem zu lösen. Zunächst wird versucht vom PC1 aus nach PC2 eine Online-Verbindung herzustellen. Nachdem beispielsweise über den Lautsprecher LS ein mehrmaliger Rufton signalisiert wurde, wird automatisch die Videoanrufbeantworterfunktion in PC2 aktiviert und von PC1 aus kann eine kombinierte Bild- und/oder Toninformation über den Auftrag nach PC2 übertragen werden, wo sie fallweise auf der Festplatte des PC's, bzw. auf dem Magnetbandgerät MB gespeichert wird. Nach der Rückkehr des Teilnehmers, dem PC2 zugeordnet ist, kann dieser die Informationen abrufen und direkt seinen Auftrag ausführen. Ein solches Gerät ist beispielsweise besonders für Servicetechniker geeignet. Ein weiterer Vorteil einer solchen Anordnung besteht darin, daß nun auch Taubstumme, die sich der Gebärdensprache bedienen, einen Anrufbeantworter betreiben können.

Wie Figur 2 zeigt, kann auf einer Anzeigevorrichtung DIS des Personalcomputers PC1, PC2, bzw. auf einem Bildschirmtelefon eine Folge von Nachrichten, die sowohl Audionachrichten als auch kombinierte Audio-Video-Nachrichten sein können übersichtlich dargestellt werden. Hier ist die Folge von Nachrichten nach Datum, Uhrzeit, Absender, Zeitdauer geordnet. Ebenfalls ist sie mit einer Kennung für Audio- und Videoinformation versehen. Beispielsweise ist in Figur 2 die Nachricht 01 eine Audionachricht, während die Nachricht 02 eine Audio-Video-Nachricht darstellt. Beispielsweise bedient sich der Videoanrufbeantworter zur Steuerung der gängigen Symbolik, die für die Steuerung von Videorecordern bzw. Audiorecordern verwendet wird. Die Symbole müssen dabei nicht als Tasten auf den Eingabemitteln eines PC oder eines Videotelefones realisiert sein, sondern können vielmehr auf einer Anzeigevorrichtung zur Anzeige gebracht werden, wo sie mit geeigneten Auswahimitteln, wie Computermouse, Touchscreen oder Cursortasten betätigt werden können.

Für den Fall, daß nicht jeder Anrufende über die Möglichkeiten der Videokommunikation verfügt, besteht die Möglichkeit, daß von einem Videoanrufbeantworter eine Abfrage durchgeführt wird, mit deren Hilfe der Anrufende beispielsweise durch Mehrfrequenzwahl Tonsignale steuern kann, ob er eine Ton- oder eine kombinierte Ton-Bild- oder eine Bild-Nachricht verschicken will. So kann beispielsweise der Anrufende von PC1 aus in PC2 steuern, ob dort eine Ton-, eine Bild- oder ein Video-Nachricht aufgezeichnet werden soll, beispielsweise sind zur Steuerung dieser Funktionen unterschiedliche Tastencodes des Ziffernblocks an einer als Eingabemittel EM vorgesehenen Tastatur nach dem Mehrfrequenzwahlverfahren eingerichtet.

## Patentansprüche

1. Videoanrufbeantworter (PC1, PC2),
a) mit Mitteln zur Aufnahme von Bildinformation (CAM),
b) mit Mitteln zur Aufnahme von Toninformation (MK, HS),
c) mit Mitteln zur Speicherung von Bildinformation (MB),
d) mit Mitteln zur Speicherung von Toninformation (MB),
e) mit Mitteln zum Anschluß an ein Kommunikationsnetz (IF).

2. Videoanrufbeantworter (PC1, PC2) nach Anspruch 1, mit Mitteln zu Wiedergabe von Toninformation (LS, HS).

3. Videoanrufbeantworter (PC1, PC2) nach einem der Ansprüche 1 oder 2, mit Mitteln zur Wiedergabe von Bildinformation (DIS).

4. Videoanrufbeantworter (PC1, PC2) nach einem der vorhergehenden Ansprüche, bei dem die Mittel zur Aufnahme von Bild- und/oder Toninformation als Mittel zum Zugriff auf ein Datennetz mit Bild-, bzw. Toninformation als Inhalten ausgestaltet sind.

5. Videoanrufbeantworter (PC1, PC2) nach einem der Ansprüche 1 bis 3, bei dem als Aufnahme- und Speichermittel eines der folgenden Mittel vorgesehen ist:
Kamera (CAM), Bildschirm (DIS), LCD-Anzeige (DIS), Lautsprecher (LS), Mikrofon (MK).

6. Videoanrufbeantworter (PC1, PC2) nach einem der vorhergehenden Ansprüche, bei dem die Mittel zur Speicherung als Magnetaufzeichnungsgerät (MB) realisiert sind.

7. Videoanrufbeantworter (PC1, PC2) nach einem der vorhergehenden Ansprüche, bei dem mindestens eines der Mittel in einem Personalcomputer (PC1, PC2)integriert ist.

8. Videoanrufbeantworter (PC1, PC2) nach einem der Ansprüche 1 bis 6, bei dem mindestens eines der Mittel in einem Bildtelefon integriert ist.

9. Verfahren zum Betrieb eines Videoanrufbeantworters (PC1, PC2) nach einem der Ansprüche 1 bis 8, bei dem bei einem über das Kommunikationsnetz (L100) eintreffenden Kommunikationsverbindungswunsch in das Kommunikationsnetz eine abgespeicherte Bild- und/oder Toninformation eingespeist wird.

10. Verfahren zum Betrieb eines Videoanrufbeantworters (PC1, PC2), bei dem eine über das Kommunikationsnetz (L100) eintreffende Bild- und/oder Toninformation automatisch gespeichert wird.

11. Verfahren zum Betrieb eines Videoanrufbeantworters nach Anspruch 11, bei dem auf einer Anzeigevorrichtung (DIS) eine Übersicht (100) über gespeicherte Bild- und/oder Toninformationen angezeigt wird.
